# EUROPÄISCHE PATENTSCHRIFT

(11) **EP 0 459 020 B1**
(45) Veröffentlichungstag und Bekanntmachung des Hinweises auf die Patenterteilung: **08.03.1995**
(21) Anmeldenummer: 90123134.0
(22) Anmeldetag: 03.12.1990
(51) Int. Cl.: G02B 6/12, G02B 6/42, H01L 31/105

(54) **Optoelektronischer Schaltkreis**
Optoelectronic circuit
Circuit opto-électronique

(30) Priorität: 28.05.1990 DE 4017157
(43) Veröffentlichungstag der Anmeldung: 04.12.1991
(73) Patentinhaber: SIEMENS AKTIENGESELLSCHAFT, 80333 München (DE)
(72) Erfinder: Heinen, Jochen, Dr., W-8013 Haar (DE)

(56) Entgegenhaltungen:
- US-A- 4 292 512
- PATENT ABSTRACTS OF JAPAN, vol. 9, no. 143 (E-322)(1866), 18. Juni 1985 ; & JP-A-60 024 083
- PATENT ABSTRACTS OF JAPAN, vol. 9, no. 240 (E-345)(1963), 26. September 1985 ; & JP-A-60 089 990
- PATENT ABSTRACTS OF JAPAN, vol. 9, no. 230 (E-343)(1953), 17. September 1985 ; & JP-A-60 084 892
- APPLIED PHYSICS LETTERS, Bd. 54, Nr. 2, 9. Januar 1989, New York, US, Seiten 114-116 ; K. Y. LIOU et al. : "MONOLITHIC INTEGRATED InGaAsP/InP DISTRIBUTED FEEDBACK LASER WITH Y-BRANCHING WAVEGUIDE AND A MONITORING PHOTODETECTOR GROWN BY METALORGANIC CHEMICAL VAPOR DEPOSITION"

## Beschreibung

In optischen Nachrichtenübertragungssystemen mit Glasfasern wird an Netzknotenpunkten eine Streckenumschaltfunktion zur Netzkonfiguration benötigt. Zur Umschaltung soll ein optisches Signal verwendet werden, das über die Nachrichtenstreckenfaser zum Knotenpunkt geleitet wird. Es ist denkbar, dieses Umschaltsignal mit einer anderen Wellenlänge als die des Nachrichtenkanals zu senden oder es als zeitlich codierten Befehl im Nachrichtenkanal zu schicken. Für die zweite genannte Möglichkeit müßte ein Modul für die Netzwerkkonfiguration (NCM) grundsätzlich folgende Funktionen ausführen können: Funktion als optoelektronischer Detektor, der einen (kleinen) Teil des ankommenden Signals empfängt und zur Befehlsdecodierung weiterleitet, Funktion als optischer Schalter, der den Lichtweg von einem Zweig auf den anderen umschaltet, und Funktion als Verstärker, der die zwangsläufig in diesen Bauelementen auftretenden Verluste beim Ein- und Auskoppeln des Lichtes zumindest kompensiert. Detektor-, Schalt-, Verstärker- und Wellenleitungsfunktionen lassen sich grundsätzlich mit III-V-Halbleiterbauelementen realisieren. Es ist kein monolithisch integrierter Aufbau dieser Funktionselementen in einem optoelektronischen Schaltkreis (OEIC) bekannt. Die Realisierung einer monolithischen Integration für einen NCM hätte den Vorteil minimaler Komplexität und Baulänge. Wegen der in der optischen Nachrichtentechnik im wesentlichen verwendeten Singlemode-Quarzfasern und Wellenlängen im Bereich von 1,3 »m bis 1,55 »m wäre ein solcher NCM-OEIC auf der Basis von Halbleitermaterial des Systemes InP/InGaAsP/InGaAlAs besonders vorteilhaft.

In der Zusammenfassung der japanischen Patentanmeldung JP-A-60 24083 in Japanese Patent Abstracts, VOL.9, NO.143 (E-322) [1866] ist eine Anordnung mit einem Halbleiterlaser beschrieben, bei der zwei aktive Laserbereiche parallel nebeneinander angeordnet sind und die ausgesandte Strahlung über eine y-förmige Gabel in einengemeinsamen Wellenleiter eingekoppelt wird. Transversal zu der Schichtebene der aktiven Schichten ist ganzflächig unterhalb der Laser eine Fotodiode für die Kontrolle der Ausgangsleistung vorgesehen. Über eine entsprechende Schaltung kann jeweils eine Laserdiode betrieben werden und bei Nachlassen der Ausgangsleistung, was mittels der Fotodiode festgestellt werden kann, auf die andere Laserdiode umgeschaltet werden.

Aufgabe der vorliegenden Erfindung ist es, eine monolithisch integrierte optoelektronische Verstärkerschaltung für die Funktion als Netzwerkkonfigurationsmodul anzugeben.

Diese Aufgabe wird mit dem optoelektronischen Schaltkreis mit den Merkmalen des Anspruches 1 gelöst. Weitere Ausgestaltungen ergeben sich aus den Unteransprüchen.

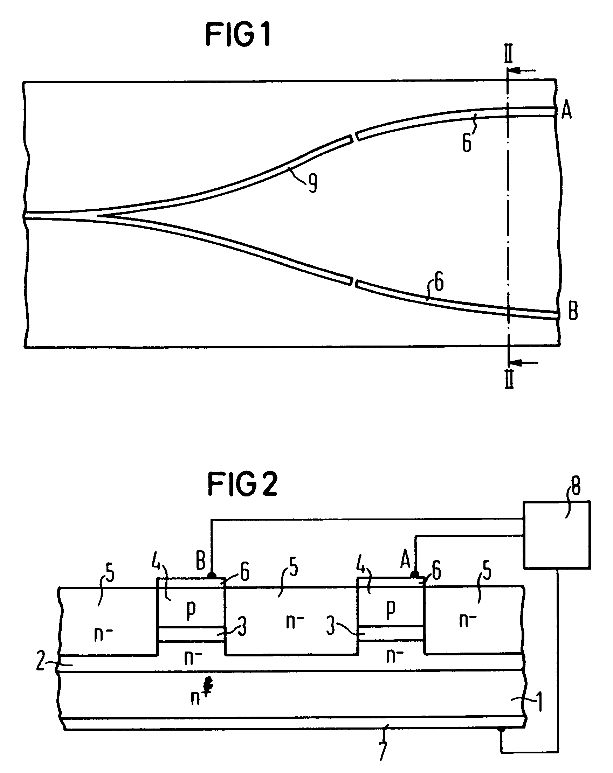

Es folgt eine Beschreibung des erfindungsgemäßen NCM anhand der Fig. 1 und 2.
Fig. 1 zeigt den erfindungsgemäßen NCM in der Aufsicht, in der der Verlauf der Wellenleiter sichtbar ist.
Fig. 2 zeigt den erfindungsgemäßen NCM in dem in Fig. 1 eingezeichneten Querschnitt.

Der Kern der vorliegenden Erfindung ist die Idee, spezielle Dioden, die als optoelektronische Verstärker in einen Wellenleiter integriert werden, so zu bauen, daß sie bei entsprechender elektrischer Umpolung auch als Photodetektor funktionieren. Die vollständige NCM-Funktion mit Ausnahme des rein elektronischen Auswerte- und Ansteuerteils läßt sich dann mit einer Anordnung erreichen, die aus einem sich verzweigenden Wellenleiter aus einem Material, das für die zu leitende Strahlung transparent ist, und zwei geeigneten optoelektronischen Verstärkerdioden in jedem Ausgangszweig des Wellenleiters besteht.

Fig. 1 zeigt ein erfindungsgemäßes Halbleiterbauelement mit dem darin integrierten optoelektronischen Schaltkreis in der Aufsicht, wobei die Bezugszeichen 6 und 9 jeweils Metallkontakte bezeichnen, die oberhalb der Wellenleiter auf die Oberfläche des Halbleitermateriales aufgebracht sind. Die beiden Verstärkerdioden, in Fig. 1 mit A und B bezeichnet, sind in die beiden Zweige des Wellenleiters integriert. Fig. 2 zeigt den durch die gestrichelte Schnittlinie in Fig. 2 bezeichneten Querschnitt durch diese Anordnung. Auf ein Substrat 1 sind eine erste Mantelschicht 2, eine aktive Schicht 3, die für jede Diode jeweils lateral streifenförmig begrenzt ist, eine zweite Mantelschicht 4 und eine dritte Mantelschicht 5 aufgewachsen. Die aktive Schicht 3 kann eine Quantum-well-Struktur haben. Die zweite Mantelschicht 4 ist lateral durch die dritte Mantelschicht 5 auf die von der aktiven Schicht eingenommenen streifenförmigen Bereiche begrenzt. Diese Begrenzung geschieht durch die dritte Mantelschicht 5, indem sie gleichzeitig die zwischen den Wellenleitern befindlichen Bereiche auffüllt.

Auf das Substrat 1 ist ein erster Metallkontakt 7 aufgebracht. Oberhalb der aktiven Schicht 3 ist für jede Diode gesondert ein streifenförmiger zweiter Metallkontakt 6 aufgebracht. Die erste Mantelschicht 2 und die dritte Mantelschicht 5 sind jeweils niedrig n-leitend dotiert. Die zweite Mantelschicht ist p-leitend dotiert. Die Vorzeichen der Dotierung können auch umgekehrt sein. Wesentlich für die Erfindung ist, daß die Dioden für die Doppelfunktion als Verstärker einerseits und Photodetektor andererseits aus einer nominell undotierten aktiven Schicht 3 zwischen einer niedrig für einen ersten Leitungstyp dotierten ersten Mantelschicht und einer für einen zweiten Leitungstyp dotierten zweiten Mantelschicht 4 besteht.

Die Strahlung, die an der Verzweigung des Wellenleiters in zwei Anteile aufgeteilt wird, gelangt zu den Dioden A und B. Soll die Nachricht den Ausgang von Diode A passieren, wird nur die Diode A als Verstärker betrieben. Für die in Frage kommende Wellenlänge ist die aktive Schicht 3 der Dioden absorbierend. Die jeweilige Diode ist daher nur für die Strahlung durchlässig, wenn sie mit einem Betriebsstrom in Flußrichtung als Verstärker betrieben wird. Wird in vorliegendem Beispiel Diode B nicht als Verstärker betrieben, sondern entweder in Sperrichtung gepolt oder bei einer Spannung von 0 Volt betrieben, stellt sie einen stark absorbierenden Wellenleiter dar. Diese Diode B arbeitet dann als Photodetektor. Die Länge der Dioden wird so bemessen, daß die Absorption der Strahlung bis zum Ausgang der Diode praktisch vollständig ist. In diesem Schaltungszustand kann Diode B ein Signal, das als Umschaltsignal entschlüsselt werden kann, empfangen. Dieses Umschaltsignal kann zu einer externen Steuerschaltung 8 (s. Fig. 2) geleitet werden, wonach diese Steuerschaltung ein Umschalten von Diode A vom Verstärkerbetrieb auf Detektorbetrieb und ein Umschalten von Diode B von Detektorbetrieb auf Verstärkerbetrieb veranlaßt. Dabei wird eine Spannung in Flußrichtung an die Diode B gelegt, während Diode A jetzt ohne Spannung oder mit einer Spannung in Sperrichtung arbeitet. Diode A funktioniert jetzt als Photodetektor, der ein entsprechendes Umschaltsignal für das Umschalten in entgegengesetzter Richtung empfangen kann. Gelangt dieses Signal in die jetzt als Photodetektor betriebene Diode A, veranlaßt die nachgeschaltete Steuerschaltung 8 ein erneutes Umschalten von Diode A auf Verstärkerbetrieb und Diode B auf Detektorbetrieb.

Für das alternative Funktionieren der Dioden als Detektor bzw. Verstärker muß eine Trennung der Potentiale der beiden Dioden gewährleistet sein, da sonst Querströme durch das Halbleitermaterial zwischen den beiden Dioden auftreten. Mit einer Doppelepitaxie, wie sie vorzugsweise für die Herstellung der Halbleiterschichtfolge und die laterale Strukturierung der Wellenleiter benötigt wird, kann durch unterschiedliche Dotierung der zweiten Mantelschicht 4 und der dritten Mantelschicht 5 eine elektrische Trennung der beiden Dioden erreicht werden. Die dritte Mantelschicht 5 ist zu dem Zweck niedrig für elektrische Leitung des ersten Leitungstyps (n-Leitung in Fig. 2) dotiert.

Damit an jede Diode zum Betrieb als Photodiode eine Sperrspannung von einigen Volt (üblicherweise maximal 10 Volt) angelegt werden kann, ohne daß es im Halbleitermaterial zu vorzeitigen Stromdurchbrüchen kommt, wird die n-Dotierung des pn-Überganges niedriger als bei optischen Verstärkern üblich gewählt. Die untere Grenze für die Dotierung bei Verstärkern liegt in der Regel bei 2 x 10¹⁷ cm⁻³. Vorzugsweise wird daher in dem beschriebenen Ausführungsbeispiel die n-Dotierung der ersten Mantelschicht 2 kleiner als 2 x 10¹⁷ cm⁻³ gewählt.

Eine Ausführungsform des erfindungsgemäßen NCM-OEIC umfaßt einen passiven Wellenleiterbereich aus einem für den vorgesehenen Wellenlängenbereich von 1,3 »m bis 1,55 »m transparenten Halbleitermaterial. Dieser passive Wellenleiter wird an die aktive Schicht 3 der den aktiven Bereich darstellenden Dioden angekoppelt. Diese aktive Schicht 3 ist z. B. aus quaternärem Material zusammengesetzt.

Eine alternative Ausführungsform des NCM-OEIC kann auch aus einer Halbleiterscheibe mit homogen verteiltem für aktiven Betrieb vorgesehenem Material aufgebaut werden. Dann muß auch der außerhalb der Dioden befindliche Anteil der Wellenleiter mit einer Betriebsspannung versorgt werden, was über einen dritten Metallkontakt 9 (s. Fig. 1) erfolgt. Dadurch wird dieser Bereich des Wellenleiters verstärkend (sozusagen als Vorverstärker) oder wird zumindest durch Strominjektion so weit gepumpt, daß er für die vorgesehene Wellenlänge transparent wird. Die Dämpfung in den schmalen Übergangsbereichen von diesem Wellenleiter auf die Dioden A und B fällt nicht ins Gewicht. Bei dieser Ausführungsform entfällt also die technologisch aufwendige Ankoppelung zwischen einem passiven und einem aktiven Bereich.

Der erfindungsgemäße optoelektronische Schaltkreis kann außer in der oben beschriebenen Streckenumschaltfunktion in den nachfolgend beschriebenen Betriebsarten eingesetzt werden. Wenn die Diode A bzw. Diode B abwechselnd als Verstärker betrieben wird, arbeitet das Bauelement als verlustfreier optischer Schalter. Ein Umschaltsignal wird dann z. B. extern in die Steuerschaltung 8 eingespeist.
Wenn die Dioden A und B in beiden Zweigen des Wellenleiters als Verstärker betrieben werden, fungiert das Bauelement als Verteiler von einem Wellenleiter auf zwei.
Das erfindungsgemäße Bauelement kann auch einfach als Empfänger betrieben werden, wenn die Diode in einem Zweig als Photodetektor geschaltet wird.
Eine weitere Möglichkeit liegt darin, ein Signal, das nicht absorbiert werden soll, zu detektieren. Zu diesem Zweck wird die Strahlung an der Gabel des Wellenleiters aufgeteilt. Der eine Anteil wird durch den betreffenden Zweig des Wellenleiters weitergeleitet, nachdem er von der darin integrierten Diode verstärkt worden ist. Der andere Anteil wird in dem anderen Zweig des Wellenleiters von der darin als Detektor betriebenen Diode empfangen und das Signal detektiert. Darüberhinaus ist es möglich die vorgenannten Funktionen miteinander zu kombinieren, wenn die Logik der angeschlossenen Steuerschaltung 8 entsprechend umfangreich ist.

## Patentansprüche

1. Optoelektronischer Schaltkreis in einem Halbleiterbauelement,
bei dem ein Wellenleiter, der sich in zwei Ausgangszweige verzweigt, vorhanden ist,
bei dem in jedem dieser Ausgangszweige eine Diode in dem Wellenleiter integriert ist,
bei dem jede dieser Dioden eine aktive Schicht (3) aufweist, die vertikal bezüglich der Schichtebene zwischen einer für einen ersten Leitfähigkeitstyp dotierten ersten Mantelschicht (2) und einer für einen zweiten Leitfähigkeitstyp dotierten zweiten Mantelschicht (4) angeordnet ist und die lateral von einer dritten Mantelschicht (5) streifenförmig begrenzt ist, bei dem die zweite Mantelschicht (4) mindestens im Bereich zwischen den Dioden durch die dritte Mantelschicht (5) vollstandig unterbrochen ist,
bei dem ein erster Metallkontakt (7) für eine elektrische Verbindung mit der ersten Mantelschicht (2) vorhanden ist, bei dem für jede Diode ein gesonderter zweiter Metallkontakt (6) für eine elektrische Verbindung mit dem jeweiligen Anteil der zweiten Mantelschicht (4) vorhanden ist, dadurch gekennzeichnet daß die dritte Mantelschicht (5) zumindest im Bereich zwischen den Dioden für den ersten Leitfähigkeitstyp derart dotiert ist, daß störende Querströme unterbunden werden, und daß die erste Mantelschicht (2) so niedrig dotiert ist, daß jede dieser Dioden alternativ als optischer Verstärker und als Fotodetektor betrieben werden kann.

2. Schaltkreis nach Anspruch 1,
**dadurch gekennzeichnet,**
daß im Bereich außerhalb der Dioden der Wellenleiter als passiver Wellenleiter ausgebildet ist und daß dieser passive Wellenleiter an die aktive Schicht (3) der Dioden angekoppelt ist.

3. Schaltkreis nach Anspruch 1,
**dadurch gekennzeichnet,**
daß im Bereich außerhalb der Dioden für den Wellenleiter das gleiche Material vorgesehen ist wie das Material der aktiven Schicht (3) der Dioden und
daß für eine Strominjektion in den Wellenleiter ein dritter Metallkontakt (9), der von jedem der zweiten Metallkontakte (6) der Dioden elektrisch weitgehend isoliert ist, vorgesehen ist.

4. Schaltkreis nach einem der Ansprüche 1 bis 3,
**dadurch gekennzeichnet,**
daß die Dotierung der ersten Mantelschicht (2) niedriger als 2 x 10¹⁷ cm⁻³ ist.

5. Schaltkreis nach einem der Ansprüche 1 bis 4,
**dadurch gekennzeichnet,**
daß eine Steuerschaltung (8) an den ersten Metallkontakt (7) und jeden der zweiten Metallkontakte (6) angeschlossen ist, daß diese Steuerschaltung (8) den Betrieb jeweils einer Diode als Verstärker und einer Diode als Photodetektor gestattet, daß diese Steuerschaltung (8) ein von der jeweils als Photodetektor betriebenen Diode empfangenes Umschaltsignal erkennt und bei Empfang dieses Umschaltsignales die zuvor als Verstärker betriebene Diode auf Betrieb als Photodetektor umschaltet und die zuvor als Photodetektor betriebene Diode auf Betrieb als Verstärker umschaltet.

6. Schaltkreis nach einem der Ansprüche 1 bis 4,
**dadurch gekennzeichnet**,
daß eine Steuerschaltung (8) an den ersten Metallkontakt (7) und jeden der zweiten Metallkontakte (6) angeschlossen ist und daß diese Steuerschaltung (8) für den Betrieb einer Diode als Verstärker und einer Diode als Detektor vorgesehen ist.

## Claims

1. Optoelectronics circuit in a semiconductor component, in which there is a waveguide which branches into two output branches, in which, in each of these output branches, a diode is integrated in the waveguide, in which each of these diodes has an active layer (3) which is arranged vertically with respect to the plane of the layer between a first covering layer (2) doped for a first conductivity type and a second covering layer (4) doped for a second conductivity type and which is limited laterally in a strip-shape by a third covering layer (5), in which the second covering layer (4) is completely interrupted, at least in the region between the diodes, by the third covering layer (5), in which there is a first metallic contact (7) for an electrical connection to the first covering layer (2), in which there is, for each diode, a separate second metal contact (6) for an electrical connection to the respective portion of the second covering layer (4), characterized in that the third covering layer (5) is doped for the first conductivity type, at least in the region between the diodes, in such a way that disturbing transverse currents are suppressed, and in that the first covering layer (2) is doped to such a low level that each of these diodes can be operated alternatively as an optical amplifier and as a photodetector.

2. Circuit according to Claim 1, characterized in that, in the region outside the diodes, the waveguide is designed as a passive waveguide and in that this passive waveguide is coupled to the active layer (3) of the diodes.

3. Circuit according to Claim 1, characterized in that, in the region outside the diodes, the same material is provided for the waveguide as the material of the active layer (3) of the diodes and in that a third metal contact (9), which is electrically insulated to a large extent from each of the second metal contacts (6) of the diodes, is provided for current injection into the waveguide.

4. Circuit according to one of Claims 1 to 3, characterized in that the doping of the first covering layer (2) is less than 2 x 10¹⁷ cm⁻³.

5. Circuit according to one of Claims 1 to 4, characterized in that a control circuit (8) is connected to the first metal contact (7) and each of the second metal contacts (6), in that this control circuit (8) permits the operation respectively of one diode as an amplifier and one diode as a photodetector, in that this control circuit (8) detects a switch-over signal received from the diode respectively operated as a photodetector and, on receiving this switch-over signal, switches over the diode previously operated as an amplifier to operation as a photodetector and switches over the diode previously operated as a photodetector to operation as an amplifier.

6. Circuit according to one of Claims 1 to 4, characterized in that a control circuit (8) is connected to the first metal contact (7) and each of the second metal contacts (6) and in that this control circuit (8) is provided for the operation of one diode as an amplifier and of one diode as a detector.

## Revendications

1. Circuit optoélectronique dans un composant à semiconducteurs, dans lequel
il est prévu un guide d'ondes, qui se ramifie en deux branches de sortie,
dans chacune de ces branches de sortie, une diode est intégrée dans le guide d'ondes,
chacune de ces diodes possède une couche active (3), qui est disposée, verticalement par rapport au plan de la couche, entre une première couche enveloppe (2) dopée pour fournir un premier type de conductivité et une seconde couche enveloppe (4) dopée pour fournir un second type de conductivité, et qui est limitée latéralement, sous la forme d'une bande, par une troisième couche enveloppe (5),
la seconde couche enveloppe (4) est complètement interrompue par la troisième couche enveloppe (5) au moins dans la zone située entre les diodes,
un premier contact métallique (7) est présent pour une liaison électrique avec la première couche enveloppe (2),
un second contact métallique particulier (6) pour une liaison électrique avec la partie respective de la seconde couche enveloppe (4) est présent pour chaque diode,
caractérisé par le fait que la troisième couche enveloppe (5) est dopée, au moins dans la zone située entre les diodes, pour fournir le premier type de conductivité de manière que des courants transversaux parasites soient interrompus, et
que la première couche enveloppe (2) est dopée suffisamment faiblement pour que chacune de ces diodes puisse fonctionner alternativement en tant qu'amplificateur optique et en tant que photodétecteur.

2. Circuit suivant la revendication 1, caractérisé par le fait
que le guide d'ondes est réalisé sous la forme d'un guide d'ondes passif dans la zone située à l'extérieur des diodes, et
que ce guide d'ondes passif est couplé à la couche active (3) des diodes.

3. Circuit suivant la revendication 1, caractérisé par le fait que, dans la zone située à l'extérieur des diodes, on prévoit pour le guide d'ondes le même matériau que celui de la couche active (3) des diodes, et
que pour une injection de courant dans le guide d'ondes, il est prévu un troisième contact métallique (9), qui est, dans une large mesure, isolé électriquement par rapport à chacun des deux contacts électriques (6) des diodes.

4. Circuit suivant l'une des revendications 1 à 3, caractérisé par le fait que le dopage de la première couche enveloppe (2) est inférieur à 2 x 10¹⁷ cm⁻³.

5. Circuit suivant l'une des revendications 1 à 4, caractérisé par le fait
qu'un circuit de commande (8) est raccordé au premier contact métallique (7) et à chacun des seconds contacts métalliques (6),
que ce circuit de commande (8) permet le fonctionnement respectivement d'une diode en tant qu'amplificateur et d'une diode en tant que photodétecteur,
que ce circuit de commande (8) identifie un signal de commutation reçu de la diode fonctionnant respectivement en tant que photodétecteur, et, lors de la réception de ce signal de commutation, commute la diode, fonctionnant jusqu'alors en tant qu'amplificateur, sur le fonctionnement en tant que photodétecteur, et commute la diode, fonctionnant jusqu'alors en tant que photodétecteur, sur le fonctionnement en tant qu'amplificateur.

6. Circuit suivant l'une des revendications 1 à 4, caractérisé par le fait
qu'un circuit de commande (8) est raccordé au premier contact métallique (7) et à chacun des seconds contacts métalliques (6), et
que ce circuit de commande (8) est prévu pour le fonctionnement d'une diode en tant qu'amplificateur et d'une diode en tant que détecteur.
